Europäisches Patentamt

European Patent Office

Office européen des brevets

(11) Veröffentlichungsnummer: **0 006 265**
**B1**

(12)

# EUROPÄISCHE PATENTSCHRIFT

(45) Veröffentlichungstag der Patentschrift:
14.04.82

(51) Int. Cl.³: **H 04 M 1/66,** H 04 M 15/34

(21) Anmeldenummer: **79200287.5**

(22) Anmeldetag: **08.06.79**

(54) **Schaltungsanordnung für Fernsprechteilnehmerstellen zur Erfassung von Wählimpulsen.**

(30) Priorität: **12.06.78  CH 6376/78**

(43) Veröffentlichungstag der Anmeldung:
**09.01.80 Patentblatt 80/1**

(45) Bekanntmachung des Hinweises auf die Patenterteilung:
**14.04.82 Patentblatt 82/15**

(84) Benannte Vertragsstaaten:
**AT BE DE FR**

(56) Entgegenhaltungen:
**DE-A-2 611 277**
**US-A-3 873 781**
**US-A-3 920 936**

(73) Patentinhaber: **SODECO-SAIA SA, Rue du Grand-Pré 70,
CH-1202 Genf (CH)**

(72) Erfinder: **Koch, Bruno, 43, Av. Louis Casais, CH-1209 -
Genève (CH)**
Erfinder: **Courvoisier, Daniel, 17 Chemin de la Barge,
CH-1232 Lully (CH)**

(74) Vertreter: **Jörchel, Dietrich R.A., c/o BUGNION S.A.
Conseils en Propriété Industrielle 10, route de Florissant
Case postale 375, CH-1211 Genève 12 Champel (CH)**

Schaltungsanordnung für Fernsprechteilnehmerstellen zur Erfassung von Wählimpulsen

Die Erfindung bezieht sich auf eine Schaltungsanordnung für Fernsprechteilnehmerstellen zur Erfassung von Wählimpulsen. Derartige Schaltungsanordnungen sind bereits bekannt (Publikation der Anmelderin vom Juli 1977 «Information D145a» über ihr Gerät MULTIPRINT) und werden in beim Fernsprechteilnehmer zu installierenden Zusatzgeräten verwendet, welche ausser der Gesprächsgebühr auch noch die angerufene Nummer, das Datum und gegebenenfalls weitere, für Buchhaltungs- oder Statistikzwecke relevante Daten registrieren, insbesondere ausdrucken. Derartige Anlagen zur automatischen Erfassung und gegebenenfalls Verarbeitung von Gesprächsdaten sind insbesondere für Hauszentralen in Hotels, Krankenhäusern, grösseren Geschäftsbetrieben usw. zweckmässig.

Nun ist es zur Vervollkommnung einer automatischen Gesprächsdatenerfassung häufig wünschenswert, ausser den Gesprächsdaten, welche aufgrund der der gewählten Rufnummer entsprechenden Wählimpulse und der von der Amtszentrale übermittelten Taximpulse definiert sind und registriert werden, auch noch weitere, für den Anrufer und/oder für das geführte Gespräch spezifische Daten zu erfassen, welche vom Anrufer nach Abnehmen des Hörers durch Wahl einer der eigentlichen Rufnummer vorangestellten, vorzugsweise mehrstelligen Codenummer in die Empfangsschaltung des Datenerfassungsgeräts eingegeben werden. Eine solche Massnahme ist insbesondere bei Hauszentralen zweckmässig, um den ein externes Gespräch führenden Teilnehmer zu identifizieren, der zu diesem Zweck eine seiner internen Teilnehmerstelle zugeordnete Codenummer wählen muss. Auf diese Weise kann die Kostenaufteilung auf alle internen Teilnehmerstellen einer Hauszentrale mittels eines einzigen, an die externe Amtsleitung anzuschliessenden Zusatzgeräts erfolgen, ohne dass an jeder internen Teilnehmerstelle ein besonderer Gebührenzähler oder eine weitergehende Anlage zur Gesprächsdatenerfassung installiert werden müsste.

Der eigentlichen Rufnummer voranzustellende Codenummern können auch dazu dienen, die einzelnen, von einem Anrufer geführten Telefongespräche nach geschäftsinternen oder anderen Kriterien zu klassifizieren, so dass derartige Codenummern zu den mannigfachsten Zwecken verwendbar sind und Rationalisierungen ermöglichen.

Bei derartigen Codenummern stellt sich jedoch das Problem, dass die bei Vorwahl dieser Codenummern erzeugten Wählimpulse nur in das Empfangsgerät, nicht jedoch über die externe Sprechleitung zur Amtszentrale gelangen dürfen, während selbstverständlich bei Wahl der Rufnummer im Anschluss an die Codenummer erzeugte Wählimpulse zur Amtszentrale übertragen werden müssen, ohne dass der Anrufer zwischen der Wahl der Codenummer und der Rufnummer irgendeine Manipulation an der Sprecheinrichtung auszuführen braucht. Ausserdem ist es wünschenswert, eine die vorstehende Bedingung erfüllende Schaltungsanordnung so zu konzipieren, dass sie einfach, ohne Eingriff in den Telefonapparat bzw. in die Sprecheinrichtung, an die externe Sprechleitung anschliessbar ist.

Es ist zwar bereits eine, bei einer Fernsprechteilnehmerstelle zu installierende Schaltungsanordnung bekannt (US-A-3 873 781), mit welcher die unbefugte Benutzung des Telefonapparats verhindert wird, indem eine Nummer nur dann gewählt werden kann oder die Verbindung des Apparats mit der Sprechleitung nur dann hergestellt wird, wenn vor der anzurufenden Nummer eine nur dem betreffenden Teilnehmer selber bekannte Sicherheitscodezahl gewählt wird, die in der Schaltungsanordnung gespeichert ist und jeweils mit den zuerst gewählten Ziffern verglichen wird. Hierbei ist jedoch die Schaltungsanordnung direkt mit dem Telefonapparat verbunden, so dass zu ihrer Installation ein Eingriff in den Telefonapparat erforderlich ist, der modifiziert werden muss und in welchem die von der Schaltungsanordnung zu steuernden Mittel zur Blockierung bzw. zur Freigabe der Wahl der Rufnummer oder der Sprechleitung unterzubringen sind. Es handelt sich also um eine Sicherheitsschaltung, die keine weitergehende Gesprächsdatenerfassung und -unterscheidung erlaubt und jeweils nur für einen Telefonapparat vorgesehen werden kann. Es stellt sich daher auch nicht das Problem, die zuvor zu wählende Sicherheitscodezahl nicht zur Amtszentrale weiterzuleiten, weil offenbar die der Sicherheitscodezahl entsprechenden Wählimpulse gar nicht auf die Sprechleitung gelangen.

Der Erfindung liegt die Aufgabe zugrunde, die eingangs beschriebene Schaltungsanordnung so auszubilden, dass zu ihrer Installation überhaupt kein Eingriff in den Telefonapparat erforderlich ist und dass vor der eigentlichen Rufnummer vom Anrufer gewählte Codenummern, welche zur Erfassung der anrufenden Teilnehmerstelle und/ oder spezifischer Gesprächsdaten dienen, automatisch von der Amtszentrale ferngehalten werden.

Diese Aufgabe wird erfindungsgemäss durch die im Anspruch 1 angegebenen Merkmale gelöst.

Dadurch wird erreicht, dass die Wählimpuls-Sperrschaltung, welche auf der zur Amtszentrale führenden Seite der Empfangsschaltung installiert ist, automatisch in den sperrenden Zustand gelangt, wenn der Teilnehmer den Hörer abnimmt, um von sich aus ein Gespräch zu führen; wenn der Teilnehmer jedoch den Hörer aufgrund eines von aussen kommenden Anrufs abhebt, dann bleibt die Wählimpuls-Sperrschaltung aufgrund der vorangehenden Rufimpulse unwirksam. Der Sperrzustand der Wählimpuls-Sperrschaltung wird automatisch aufgehoben, sobald der Teilnehmer eine bestimmte Codenummer gewählt hat oder den Hörer wieder auf die Gabel legt.

Die vorgeschlagene Schaltungsanordnung lässt sich weitgehend mit handelsüblichen Bauelementen auf verhältnismässig einfache und preiswerte Weise realisieren und kann als vorgefertigte Baueinheit jederzeit nachträglich beim Teilnehmer ohne Eingriff in die Sprecheinrichtung mit wenigen Handgriffen installiert werden. Ein weiterer Vorteil ergibt sich, wenn das zur Gesprächsdatenerfassung dienende Gerät zwecks automatischer Verarbeitung der Daten einen Mikroprozessor enthält, welcher zur Inbetriebnahme initialisiert, d.h. programmiert werden muss; die für diese Programmierung erforderlichen, bisher mit Codierungsschaltern erzeugten elektrischen Impulse können in diesem Falle einfach, nach Anschluss des den Mikroprozessor enthaltenden Zusatzgeräts, durch Wahl einer entsprechenden Programmierungsnummer mittels der Wählscheibe bzw. Wähltastatur des Telefonapparats erzeugt werden.

Bevorzugte, einfache Ausführungsformen der Wählimpuls-Sperrschaltung sind in den Ansprüchen 2 und 3 angegeben. Die vorgegebenen Wählimpuls-Kombinationen können entweder, gemäss Anspruch 4, durch die Stellenzahl der Codenummern oder aber, gemäss Anspruch 5, durch bestimmte Codezahlen selber definiert sein, so dass der Sperrzustand der Wählimpuls-Sperrschaltung entweder nach Empfang einer bestimmten Anzahl von Ziffern oder aber nach Empfang ausgewählter Codezahlen aufgehoben wird. Im letzten Falle ergibt sich die Möglichkeit, von den ausgewählten Codenummern abweichende Rufnummern für hausinterne Gespräche vorzusehen, so dass nach Wahl einer solchen hausinternen Nummer der Sperrzustand der Wählimpuls-Sperrschaltung bestehen bleibt, welche daher eine Übertragung dieses Gesprächs zur Zentrale verhindert.

Zweckmässige Ausführungsformen der Schaltungsanordnung nach der Erfindung sind in den Ansprüche 6 und 7 angegeben.

Die Erfindung wird anhand der Zeichnungen an zwei Ausführungsbeispielen näher erläutert. Es zeigt:

Fig. 1 eine vereinfachtes Blockschaltbild einer ersten Ausführungsform der Schaltungsanordnung nach der Erfindung,

Fig. 2 ein den Spannungsverlauf am Eingang der Empfangsschaltung während des Abhebens des Hörers und der Wahl der Code- und Rufnummern veranschaulichendes Diagramm,

Fig. 3 ein den entsprechenden Spannungsverlauf in der Amtszentrale veranschaulichendes Diagramm,

Fig. 4, 5 u. 6 die den Fig. 1, 2 und 3 entsprechenden Figuren einer zweiten Ausführungsform, wobei jedoch Fig. 6 den Stromverlauf in der Amtszentrale zeigt, und

Fig. 7 ein detailliertes Blockschaltbild einer Ausführungsform der Empfangsschaltung.

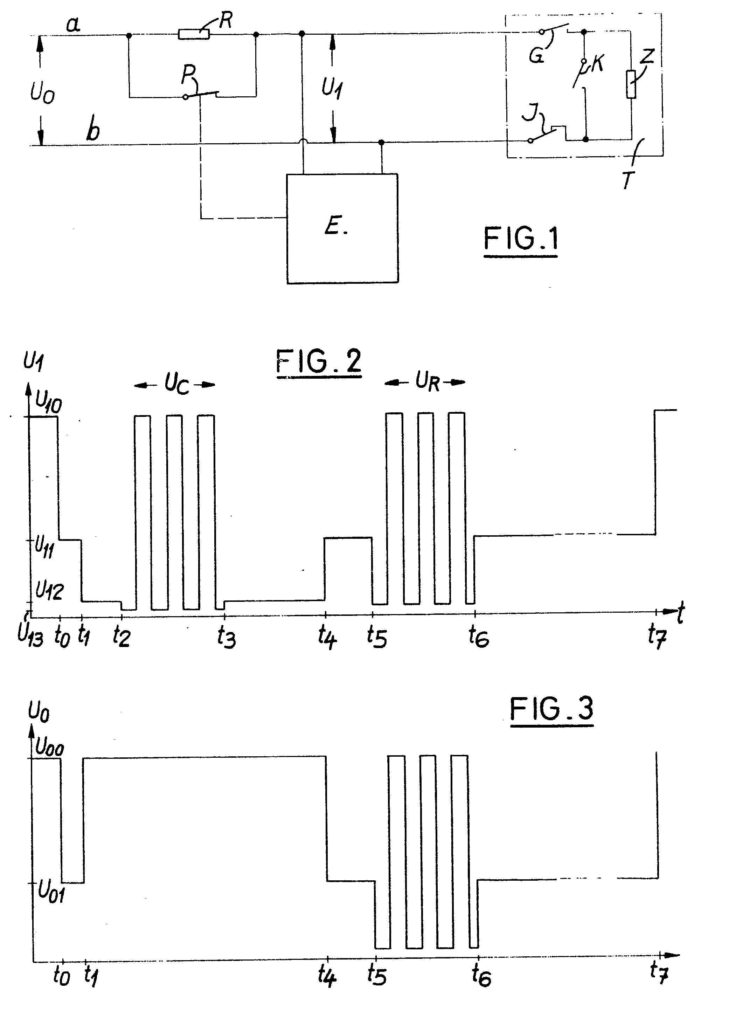

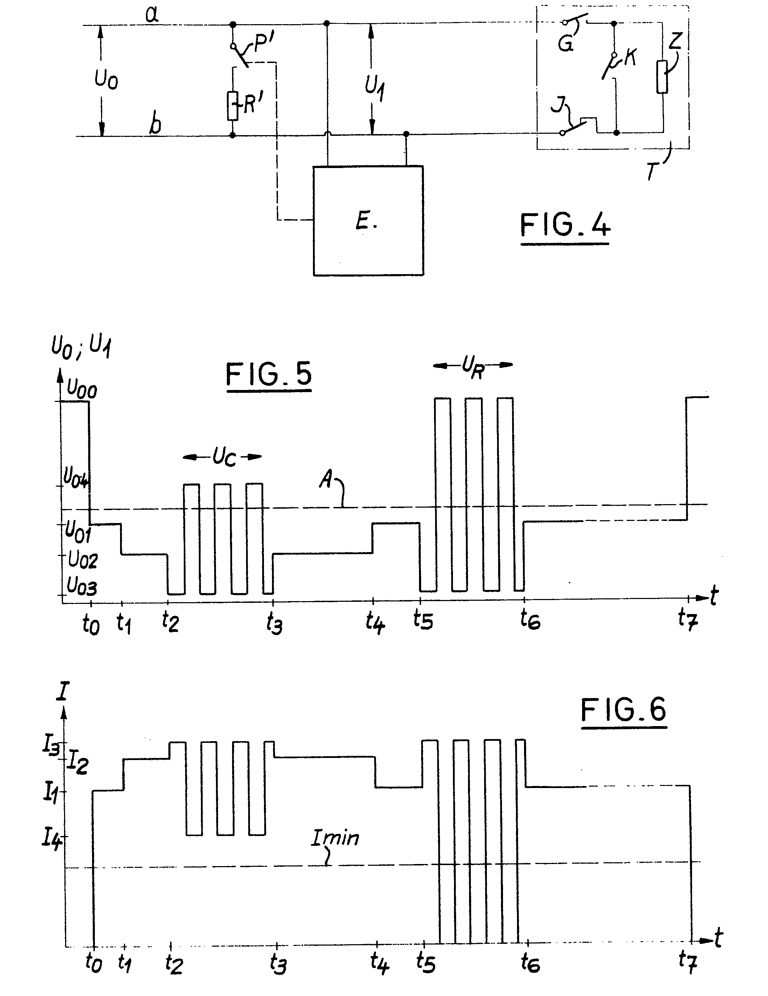

In den Fig. 1 und 4 ist schematisch eine Fernsprechteilnehmerstelle mit der Sprecheinrichtung T und einer vor dieser an die Sprechleitung a, b angeschlossenen Empfangsschaltung E dargestellt. Die Sprecheinrichtung T hat in bekannter Weise in der einen Sprechader einen Gabelkontakt G, der bei aufliegendem bzw. bei abgenommenem Hörer geöffnet bzw. geschlossen ist, einen mit dem Gabelkontakt G in Reihe liegenden Impulskontakt J, der normalerweise geschlossen ist und bei Rückdrehung der aufgezogenen Wählscheibe die Wählimpulse in Form von Ruhestromimpulsen erzeugt, und einen Kurzschlusskontakt K, welcher die durch den Widerstand Z symbolisierte Sprecheinrichtung während der Betätigung der Wählscheibe kurzschliesst, sonst aber geöffnet ist.

Auf der der Sprecheinrichtung T abgewandten Seite, also auf der zur externen Amtszentrale führenden Seite der Empfangsschaltung E ist nun gemäss der vorliegenden Erfindung eine Wählimpuls-Sperrschaltung vorgesehen, die in den betrachteten Ausführungsbeispielen nach Fig. 1 bzw. 4 einen Widerstand R bzw. R' und einen Schalter P bzw. P' aufweist, durch welchen der Widerstand vorübergehend in die Sprechleitung schaltbar ist. Dieser Widerstand R bzw. R' ist so bemessen, dass er, solange er in der Sprechleitung liegt, die an der Sprecheinrichtung T erzeugten Wählimpulse soweit schwächt, dass sie in der Amtszentrale unwirksam sind.

Im Beispiel nach Fig. 1 liegt der Widerstand R in der einen Sprechleitung a, also in Reihe mit der Sprecheinrichtung T, und der Schalter P ist als Ruhekontakt parallel zum Widerstand R geschaltet, so dass er in seiner geschlossenen Ruhelage, die er normalerweise einnimmt, den Widerstand R kurzschliesst. Die Empfangsschaltung E ist dazu eingerichtet, den Schalter P zu öffnen und damit den Widerstand R in die Sprechleitung a zu schalten, wenn der Teilnehmer den Hörer, ohne angerufen worden zu sein, abnimmt, der Gabekontakt G also geschlossen wird und daher der Linienstrom zu fliessen beginnt. Wenn die Empfangsschaltung E eine von mehreren vorgegebenen Wählimpulskombinationen empfangen hat, welche einer vor der Rufnummer zu wählenden Codenummer entsprechen und wegen des praktisch fehlenden Linienstroms in der Amtszentrale unwirksam bleiben, wird der Schalter P wieder geschlossen, so dass nunmehr die der anschliessend gewählten Rufnummer entsprechenden Wählimpulse in normaler Weise zur Amtszentrale gelangen. Die Empfangsschaltung E bewirkt auch dann das Schliessen des Schalters P, wenn der Hörer wieder aufgelegt, der Gabelkontakt G also geöffnet wird, ohne dass zuvor eine der vorgegebenen Codenummern gewählt wurde, um auf alle Fälle nach Auflegen des Hörers die Sprecheinrichtung T wieder empfangsbereit zu machen.

Wenn jedoch die Sprecheinrichtung T einen externen Anruf erhält, dann bewirken die zuvor in der Empfangsschaltung E eintreffenden Rufimpulse, dass ein Öffnen des Schalters P beim Abheben des Hörers verhindert wird, damit dieses externe Gespräch korrekt empfangen werden kann.

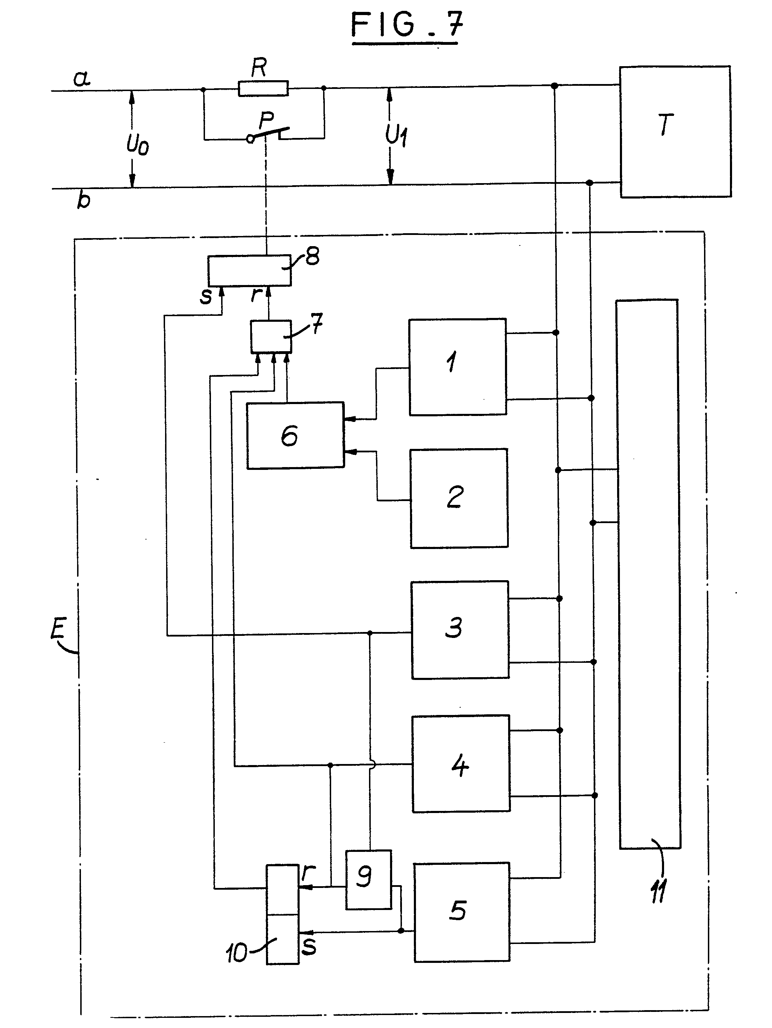

Das Blockschaltbild nach Fig. 7 zeigt ein Ausführungsbeispiel einer Empfangsschaltung E, welche einen Wählimpulsdetektor 1, einen auf das Einsetzen des Linienstromes ansprechenden Linienstromdetektor 3, einen auf das Verschwinden des Linienstroms ansprechenden Nullstromdetektor 4, einen Rufimpulsdetektor 5 und die hier nicht weiter interessierende, durch einen Block 11 dargestellte Schaltungsanordnung zur Erfassung und Auswertung der Gesprächsdaten aufweist; alle vorstehend genannten Einheiten sind zwischen der eigentlichen Teilnehmerstelle T und der aus dem Widerstand R und dem Schalter P bestehenden Wählimpuls-Sperrschaltung an die Sprechleitung a, b angeschlossen. Ferner weist die Empfangsschaltung E einen Speicher 2 auf, in welchem die vorgegebenen Wählimpulskombinationen gespeichert sind, nach deren Empfang die Rückschaltung der Wählimpuls-Sperrschaltung in ihren nichtsperrenden Zustand erfolgen soll. Die Ausgänge des Wählimpulsdetektors 1 und des Speichers 2 sind mit einem Vergleichsglied 6 verbunden, dessen Ausgang an eine ODER-Schaltung 7 angeschlossen ist, zu welcher auch der Ausgang des Nullstromdetektors 4 führt. Der Ausgang des Rufimpulsdetektors 5 ist einerseits an den einen Eingang s eines bistabilen Steuergliedes 10 in Form eines Flip-Flop und anderseits an ein Zeitglied 9 angeschlossen, dessen Ausgang mit dem anderen Eingang r des Steuergliedes 10 verbunden ist. Der Ausgang dieses Steuergliedes 10, welcher bei Erregung des Eingangs s Spannung führt, ist ebenfalls an die ODER-Schaltung 7 angeschlossen, deren Ausgang mit dem einen Eingang r eines bistabilen, ebenfalls als Flip-Flop ausgebildeten Schaltgliedes 8 verbunden ist Der andere Eingang s dieses Schaltgliedes 8 ist an den Ausgang des Linienstromdetektors 3 angeschlossen, welcher ausserdem mit dem Zeitglied 9 verbunden ist, damit dieses Zeitglied 9 beim Ansprechen dieses Linienstromdetektors 3 abgeschaltet werden kann, falls es zuvor durch den Rufimpulsdetektor 5 eingeschaltet worden ist. Der Ausgang des Nullstromdetektors 4 ist ausserdem noch zwecks Rückstellung des Steuergliedes 10 mit dessen Eingang r verbunden. Der Ausgang des Schaltgliedes 8 steuert ein den Schalter P betätigendes Stellglied, wobei im betrachteten Beispiel die Anordnung so getroffen ist, dass bei Erregung des Eingangs s des Schaltgliedes 8 der Schalter P geöffnet, also die Wählimpuls-Sperrschaltung in ihren Sperrzustand geschaltet wird, und bei Erregung des anderen Eingangs r der Schalter P geschlossen, d.h. die Wählimpuls-Sperrschaltung in ihren nichtsperrenden Zustand geschaltet wird.

Die Arbeitsweise der Schaltungsanordnung nach Fig. 7, welche dem Beispiel nach Fig. 1 entspricht, wird nachstehend anhand der Fig. 2 und 3 näher erläutert.

Fig. 2 zeigt den zeitlichen Verlauf der Spannung U1 an den Eingangsklemmen der Empfangsschaltung E und Fig. 3 den entsprechenden zeitlichen Verlauf der Spannung U0 in der Zentrale, also am amtsseitigen Ende der Sprechleitung a, b. Solange der Hörer aufliegt, also der Gabelkontakt G geöffnet ist, liegt an der Sprechleitung a, b die normale Linienspannung mit dem Spannungswert U10 bzw. U00 von beispielsweise 48 V, und der

Widerstand R ist durch den geschlossenen Schalter P überbrückt.

Wenn zum Zeitpunkt t0 der Hörer abgenommen, d.h. der Gabelkontakt G geschlossen wird, beginnt der Linienstrom zu fliessen, wobei die Spannung auf den Spannungswert U11 bzw. U01 von etwa 10 V absinkt. Der Linienstromdetektor 3 spricht darauf an und bewirkt die Umschaltung des Schaltgliedes 8, welches den Schalter P zum Zeitpunkt t1 öffnet. Das hat zur Folge, dass wegen des Spannungsabfalls am Widerstand R die Spannung U1 weiter auf den Spannungswert U12 absinkt und gleichzeitig die Spannung U0 in der Zentrale wieder auf annähernd den Spannungswert U00 ansteigt, so dass von der Zentrale aus die Sprecheinrichtung T als nicht besetzt erscheint. In diesem Betriebszustand beträgt der Linienstrom weniger als beispielsweise 1 mA. Zu diesem Zwecke kann der Widerstand R zwischen 50 und 60 k$\Omega$, vorzugsweise etwa 56 k$\Omega$ betragen.

Zum Zeitpunkt t2 beginnt der Teilnehmer, die Wählscheibe zu betätigen, und wählt, bis zum Zeitpunkt t3, zunächst eine vorgegebene Codenummer, die vorzugsweise mehrstellig ist und deren Wählimpulskombination in der schematischen Darstellung nach Fig. 2 lediglich durch drei Spannungsimpulse $U_C$ veranschaulicht ist. Zu Beginn der Betätigung der Wählscheibe sinkt zunächst die Spannung U1 infolge Schliessens des Kurzschlusskontaktes K zum Zeitpunkt t2 auf den Spannungswert U13 ab, dann folgen die Spannungsimpulse $U_C$, entsprechend den durch periodisches Öffnen des Impulskontaktes J erzeugten Ruhestromimpulsen, und nach Beendigung der Codenummer-Wahl und Wiederöffnen des Kurzschlusskontaktes K zum Zeitpunkt t3 steigt die Spannung U1 wieder auf den Spannungswert U12 an. Die der gewählten Codenummer entsprechende Wählimpulskombination wird in den Wählimpulsdetektor 1 eingegeben und im nachgeschalteten Vergleichsglied 6 mit dem im Speicher 2 gespeicherten Wählimpulskombinationen verglichen. Bei Übereinstimmung bewirkt ein Ausgangssignal des Vergleichsgliedes 6 über die ODER-Schaltung 7 die Umschaltung des Schaltgliedes 8, was zum Zeitpunkt t4 das Schliessen des Schalters P zur Folge hat.

Vom Zeitpunkt t1 bis t4 herrscht am amtsseitigen Ende der Sprechleitung a, b praktisch die konstante, normale Linienspannung mit dem Spannungswert U00 (Fig. 3), so als ob der Gabelkontakt G der Sprecheinrichtung T geöffnet wäre. Zum Zeitpunkt t4 steigt die Spannung U1 wieder auf den Spannungswert U11 an, und die Spannung U0 sinkt auf den Spannungswert U01 ab, da nunmehr der normale Linienstrom fliesst. Nach der Wahl der Codenummer wartet der Anrufer auf das Freizeichen, bevor er, zwischen den Zeitpunkten t5 und t6, die gewünschte Rufnummer wählt, deren Wählimpulskombination in den Fig. 2 und 3 schematisch nur durch drei Spannungsimpulse $U_R$, welche den Spannungswert U10 bzw. U00 haben, dargestellt sind. Anschliessend steigt, nach dem Öffnen des Kurzschlusskontaktes K, die Spannung auf den Spannungswert U11 bzw. U01, und nach Beendigung des Gesprächs, wenn der Gabelkontakt G zum Zeitpunkt t7 wieder geöffnet wird, steigt die Spannung wieder auf die normale Linienspannung mit dem Spannungswert U10 bzw. U00.

Wenn der Teilnehmer ohne Wahl einer der vorgegebenen Codenummern den Hörer wieder auflegt, weil er sich beispielsweise beim Wählen geirrt hat, spricht der Nullstromdetektor 4 an und bewirkt über die ODER-Schaltung 7 die Rückschaltung des Schaltgliedes 8 und damit das Schliessen des Schalters P.

Wenn die Sprecheinrichtung T einen externen Anruf erhält, dann werden die eintreffenden Rufimpulse vom Rufimpulsdetektor 5 erfasst, der die Umschaltung des Steuergliedes 10 bewirkt. Dieses Steuerglied 10, welches die Funktion eines Rufimpulsspeichers hat, gibt nunmehr über die ODER-Schaltung 7 ein Blockierungssignal auf den Eingang r des Schaltgliedes 8 ab, wodurch verhindert wird, dass beim Abnehmen des Hörers der vom Linienstromdetektor 3 erzeugte Steuerbefehl wirksam wird. Vielmehr bleibt nun der Schalter P geschlossen, so dass das Gespräch ohne Beeinträchtigung durch den Widerstand R geführt werden kann. Erst wenn nach einem solchen externen Anruf der Hörer an der Sprecheinrichtung T wieder aufgelegt wird, spricht der Nullstromdetektor 4 an und löscht durch Rückschaltung des Steuergliedes 10 das Blockierungssignal, so dass das Schaltglied 8 wieder bereit ist, einen vom Linienstromdetektor 3 kommenden Steuerbefehl auszuführen.

Für den Fall, dass ein externer Anruf an der Sprecheinrichtung T nicht beantwortet wird, ist dem Rufimpulsdetektor 5 ferner das Zeitglied 9 nachgeschaltet, dessen Zeitkonstante grösser als eine Rufimpulsperiode ist und dessen Ausgangssignal den Eingang r des Steuergliedes 10 beaufschlagt. Rufimpulse, bei denen es sich im allgemeinen um Wechselspannungsimpulse von 75 V handelt, haben in der Regel eine Dauer von etwa 1 Sekunde mit Pausenzeiten von etwa 4 Sekunden. In einem solchen Falle kann die Zeitkonstante des Zeitgliedes 9 beispielsweise 6 s betragen. Wenn der externe Anrufer keine Antwort erhält und nach einer Weile auflegt, die Rufimpulse also aufhören, dann gibt das Zeitglied 9, welches über den Rufimpulsdetektor 5 bei jedem Rufimpuls erneut eingeschaltet wird, 6 Sekunden nach Eintreffen des letzten Rufimpulses ein Ausgangssignal ab, durch welches das Steuerglied 10 rückgeschaltet und damit das von diesem abgegebene Blockierungssignal gelöscht wird. Wenn jedoch der externe Anruf an der Sprecheinrichtung T beantwortet und dort der Gabelkontakt G geschlossen wird, bewirkt das Ausgangssignal des Linienstromdetektors 3 die Ausserbetriebsetzung bzw. die Rückschaltung des eingeschalteten Zeitgliedes 9 in seinen Ruhezustand, damit in diesem Falle nach Ablauf der der Zeitkonstanten entsprechenden Verzögerungszeit das Blockierungssignal des Steuergliedes 10 nicht etwa gelöscht wird; diese Löschung erfolgt dann, wie erwähnt, erst nach Öffnen des Gabelkontaktes G durch den Nullstromdetektor 4.

Damit der Linienstromdetektor 3 nur beim Schliessen des Gabelkontakts G anspricht, ist er beispielsweise so eingerichtet, dass er nur auf die dabei auftretende spezifische Spannungserniedrigung vom Spannungswert U10 auf den Spannungswert U11 reagiert, die in der Darstellung nach Fig. 2 zum Zeitpunkt t0 stattfindet und typischerweise einer Absenkung der Spannung von etwa 48 auf 10 V entspricht. Auf diese Weise reagiert der Linienstromdetektor 3 nicht, wenn die Spannung von niedrigeren Werten als 48 V oder auf andere Werte als 10 V absinkt, wie beispielsweise zum Zeitpunkt t5 nach Fig. 2 oder am Ende jedes der beim Wählen auftretenden Spannungsimpulse $U_R$. Ebenso ist der Nullstromdetektor 4 so eingerichtet, dass er z.B. nur bei demjenigen spezifischen Spannungsanstieg vom Spannungswert U11 auf den Spannungswert U10, also von etwa 10 auf 48 V, anspricht, welcher beim Öffnen des Gabelkontakts G auftritt.

Im Beispiel nach Fig. 4 besteht die Wählimpuls-Sperrschaltung aus einem in Reihe mit einem Schalter P' liegenden Widerstand R', welcher parallel zur Sprecheinrichtung T geschaltet ist. Der Schalter P' funktioniert in diesem Falle als Arbeitskontakt, d.h. er ist normalerweise offen und wird zwecks Einschaltens des Widerstands R' in die Sprechleitung durch die Empfangsschaltung E geschlossen. Diese Empfangsschaltung E kann im Beispiel nach Fig. 4 genauso aufgebaut sein wie die vorstehend anhand der Fig. 7 beschriebene Schaltung, wobei der einzige Unterschied darin besteht, dass die Eingänge s und r des Schaltgliedes 8 vertauscht sind, d.h. ein Ausgangssignal der ODER-Schaltung 7 bewirkt über das Schaltglied 8 das Öffnen des Schalters P', während ein Steuerbefehl des Linienstromdetektors 3 das Schliessen des Schalters P' zur Folge hat.

Die Arbeitsweise der Schaltung nach Fig. 4 wird anhand der Fig. 5 und 6 kurz erläutert. Fig. 5 zeigt wieder den zeitlichen Verlauf der an der Empfangsschaltung E liegenden Spannung U1, die in diesem Falle praktisch gleich der Spannung U0 in der Zentrale ist, während die Fig. 6 diesmal den zeitlichen Verlauf des Linienstromes I in der Amtszentrale darstellt.

Solange der Gabelkontakt G offen ist, herrscht bei offenem Schalter P' die maximale Linienspannung mit dem Spannungswert U00 von etwa 48 V. Sobald der Gabelkontakt G zum Zeitpunkt t0 geschlossen wird, sinkt die Spannung auf den Spannungswert U01 von etwa 10 V, während gleichzeitig der Linienstrom auf den Stromwert I1 ansteigt.

Zum Zeitpunkt t1 wird der Schalter P' durch den Linienstromdetektor der Empfangsschaltung E geschlossen, was ein Absinken der Spannung auf den Spannungswert U02 und einen Anstieg des Linienstroms auf den Stromwert I2 zur Folge hat. Zum Zeitpunkt t2 beginnt der Teilnehmer, die Codenummer zu wählen, und die Spannung sinkt zunächst wegen des Schliessens des Kurzschlusskontaktes K auf den Spannungswert U03, während der Linienstrom auf den Stromwert I3 ansteigt. Die folgenden, der gewählten Codenum-

mer entsprechenden Spannungsimpulse $U_C$ haben die Spannungswerte U04 und bewirken entsprechende Linienstromeinbrüche auf den Stromwert I4. Der Widerstand R' ist so gewählt, dass dieser Spannungswert U04 der Spannungsimpulse $U_C$ hinreichend über der durch die gestrichelte Linie in Fig. 5 angedeuteten Ansprechschwelle A der Empfangsschaltung E, insbesondere des Wählimpulsdetektors, liegt, dass jedoch gleichzeitig der Stromwert I4 oberhalb desjenigen Stromminimalwertes $I_{min}$ bleibt, der durch die gestrichelte Linie in Fig. 6 angedeutet ist und unter welchen die in der Amtszentrale eintreffenden Ruhestromimpulse absinken müssen, um dort wirksam zu sein und die Wähleinrichtungen zu betätigen. Der Stromminimalwert $I_{min}$ liegt beispielsweise bei etwa 20 mA. Auf diese Weise wird erreicht, dass die der gewählten Codenummer entsprechenden Spannungsimpulse $U_C$ zwar vom Wählimpulsdetektor der Empfangsschaltung E erfasst und identifiziert werden, jedoch in der Amtszentrale keine Wirkung haben.

Nach Beendigung der Codenummer-Wahl öffnet der Kurzschlusskontakt K zum Zeitpunkt t3, und die Spannung steigt wieder auf den Spannungswert U02 an, während der Linienstrom den Stromwert I2 annimmt. Wenn anschliessend zum Zeitpunkt t4 der Schalter P' aufgrund eines Steuerbefehls des Vergleichsgliedes 6 der Empfangsschaltung E wieder geöffnet wird, nimmt die Spannung den Spannungswert U01 und der Linienstrom den Stromwert I1 an. Zwischen den Zeitpunkten t5 und t6 erfolgt die Wahl der Rufnummer, wobei die entsprechenden Rufwählimpulse Spannungsimpulse $U_R$ mit dem Spannungswert U00 zur Folge haben, denen normale Ruhestromimpulse im Linienstromdiagramm entsprechen, so dass die Rufnummer sowohl von der Registrier- und Auswerteinheit (Block 11) der Empfangsschaltung E als auch von der Amtszentrale erfasst wird. Nach Öffnen des Gabelkontakts G zum Zeitpunkt t7 verschwindet der Linienstrom, und es stellt sich wieder der Spannungswert U00 ein.

Wenn es sich, wie im betrachteten Beispiel, um einen Einzelteilnehmer handelt, hat er mit der Schaltungsanordnung nach der Erfindung die Möglichkeit, durch Vorwahl geeigneter Codenummern für jedes geführte Telefongespräch zusätzlich noch gesprächsspezifische Daten aufgrund von geschäftlichen oder statistischen Kriterien, z.B. Auftragsnummern usw., in die Empfangsschaltung einzugeben, welche dort, vorzugsweise mittels eines Mikroprozessors, in an sich bekannter Weise verarbeitbar sind.

Vorzugsweise jedoch handelt es sich bei der in den Fig. 1 und 4 dargestellten Sprecheinrichtung um die Telefonstation einer Hauszentrale, an welche eine Vielzahl von internen Teilnehmerstellen angeschlossen ist; dabei ist jeder internen Teilnehmerstelle eine besondere, zu ihrer Identifizierung dienende Codenummer zugeordnet, welche der Teilnehmer vor Wahl der Rufnummer zu wählen hat und welche über die allen internen Teilnehmerstellen gemeinsame Amtsleitung, bei welcher es sich um die in den Fig. 1 und 4 dargestellte Sprechleitung a, b handelt, durch eine einzige angeschlossene Empfangsschaltung, welche auch die anderen üblichen Gesprächsdaten registriert, erfassbar ist. Auf diese Weise ist eine vollautomatische, individuelle Abrechnung der Gesprächsgebühren für jede der internen Teilnehmerstellen möglich.

Bei einer Hauszentrale mit Handvermittlung für externe Gespräche kann die eine gewünschte Verbindung herstellende Telefonistin zunächst die Codenummer der anrufenden Teilnehmerstelle wählen, um diese automatisch zu erfassen.

Das charakteristische Merkmal einer Codenummer kann einfach in der Stellenzahl bestehen, so dass also z.B. alle dreistelligen Nummern als Codezahlen vorgebbar sind, und im Speicher 2 der Empfangsschaltung E lediglich die Information der Dreistelligkeit einer Zahl gespeichert ist; in diesem Falle wird stets nach der Vorwahl dreier Ziffern die Wählimpuls-Sperrschaltung in ihren nichtsperrenden Zustand zurückgeschaltet. Es können aber auch ausgewählte Zahlen als Codenummern vorgesehen und dementsprechend im Speicher 2 gespeichert sein. In diesem Falle können alle von den Codenummern abweichenden Nummern z.B. als interne Rufnummern für alle an eine gemeinsame Sprechleitung bzw. Hauszentrale angeschlossenen internen Teilnehmer fungieren, so dass nach Wahl einer solchen internen Anschlussnummer die Wählimpuls-Sperrschaltung bis zum Wiederauflegen des Hörers im Sperrzustand bleibt und damit gleichzeitig die weitere Funktion übernimmt, die Übertragung der Wählimpulse bei internen Anrufen sowie der internen Gespräche zur Amtszentrale zu verhindern.

## Patentansprüche

1. Schaltungsanordnung für Fernsprechteilnehmerstellen mit einer an die Sprechleitung (a, b) angeschlossenen Empfangsschaltung (E), welche zur Erfassung von Wählimpulsen Linienstrom- (3) und Wählimpulsdetektoren (1) aufweist, dadurch gekennzeichnet, dass in der Sprechleitung (a, b) auf der der Sprecheinrichtung (T) abgewandten Seite der Empfangsschaltung (E) eine von dieser steuerbare Wählimpuls-Sperrschaltung (P, R; P', R') angeordnet ist und die Empfangsschaltung (E) ferner einen Rufimpulsdetektor (5) aufweist und dazu eingerichtet ist, die normalerweise im unwirksamen, nichtsperrenden Zustand befindliche Wählimpulssperrschaltung (P, R; P', R') nach Schliessen des Gabelkontakts (G) der Sprecheinrichtung (T) ohne vorheriges Ansprechen des Rufimpulsdetektors (5) solange in den Sperrzustand zu schalten, bis die Empfangsschaltung (E) eine von mehreren vorgegebenen Wählimpuls-Kombinationen empfangen hat oder der Gabelkontakt (G) wieder geöffnet wird.

2. Schaltungsanordnung nach Anspruch 1, dadurch gekennzeichnet, dass die Wählimpuls-Sperrschaltung einen in Reihe mit der Sprecheinrichtung (T) geschalteten Widerstand (R) und einen parallel zu diesem Widerstand (R) liegenden Schalter (P) aufweist, welcher normalerweise geschlossen und durch die Empfangsschaltung (E) steuerbar ist, und dass der Widerstand (R) so bemessen ist, dass bei geöffnetem Schalter (P) eine wirksame Übertragung von Wählimpulsen zur Zentrale verhindert wird.

3. Schaltungsanordnung nach Anspruch 1, dadurch gekennzeichnet, dass die Wählimpuls-Sperrschaltung einen Widerstand (R') in Reihe mit einem normalerweise offenen und durch die Empfangsschaltung (E) steuerbaren Schalter (P') aufweist und diese Reihenschaltung parallel zur Sprecheinrichtung (T) liegt und dass der Widerstand (R') so bemessen ist, dass bei geschlossenem Schalter (P') eine wirksame Übertragung von Wählimpulsen zur Zentrale verhindert wird.

4. Schaltungsanordnung nach einem der Ansprüche 1–3, dadurch gekennzeichnet, dass die vorgebbaren Wählimpuls-Kombinationen durch Codezahlen mit einer bestimmten, in der Empfangsschaltung (E) gespeicherten Anzahl von Ziffern definiert sind.

5. Schaltungsanordnung nach einem der Ansprüche 1–3, dadurch gekennzeichnet, dass die vorgebbaren Wählimpuls-Kombinationen durch in der Empfangsschaltung (E) gespeicherte Codezahlen definiert sind.

6. Schaltungsanordnung nach einem der Ansprüche 1–3, dadurch gekennzeichnet, dass der Rufimpulsdetektor (5) beim Ansprechen ein nachgeschaltetes bistabiles Steuerglied (10) in einen Betriebszustand schaltet, in welchem ein das Umschalten der Wählimpuls-Sperrschaltung (P, R; P', R') in ihren Sperrzustand verhinderndes Blockierungssignal erzeugt wird, und dass dieses Steuerglied (10) unter Löschung des Blockierungssignals durch ein ebenfalls dem Rufimpulsdetektor (5) nachgeschaltetes Zeitglied (9) nach einer Zeitspanne, welche grösser als eine Rufimpulsperiode ist, oder aber durch einen beim Verschwinden des Linienstroms infolge Öffnens des Gabelkontakts (G) ansprechenden Nullstromdetektor (4) rückschaltbar ist, und dass ferner der auf das Einsetzen des Linienstroms ansprechende Linienstromdetektor (3) dazu eingerichtet ist, einerseits die Wählimpuls-Sperrschaltung (P, R; P', R') in ihren Sperrzustand zu schalten und anderseits das erwähnte Zeitglied (9) in seinen Ruhezustand rückzuschalten, falls es zuvor durch den Rufimpulsdetektor (5) erregt wurde.

7. Schaltungsanordnung nach Anspruch 6, dadurch gekennzeichnet, dass der Wählimpulsdetektor (1) und ein Speicher (2) für die vorgegebenen Wählimpulskombinationen mit einem Vergleichsglied (6) verbunden sind, dass der Linienstromdetektor (3) an den einen Eingang (s) und das Vergleichsglied (6), der Nullstromdetektor (4) und das Steuerglied (10) an den anderen Eingang (r) eines die Wählimpuls-Sperrschaltung (P, R; P', R') steuernden Schaltgliedes (8) angeschlossen sind, welches bei Erregung des ersterwähnten Eingangs (s) die Wählimpuls-Sperrschaltung in den Sperrzustand und bei Erregung des zweiterwähnten Eingangs (r) die Wählimpuls-Sperrschaltung in den nichtsperrenden Zustand schaltet.

## Claims

1. Circuit for telephone sets comprising a receiving circuit (E) connected to the telephone line (a, b) and equipped with a line-current detector (3) and a dialling-impulse detector (1) for detecting dialling impulses, characterized in that a dialling-impulse blocking circuit (P, R; P', R') is connected to the telephone line (a, b) at the side of the receiving circuit (E), which is turned away from the telephone set (T), said blocking circuit being controlled by said receiving circuit (E), and that the receiving circuit (E) comprises a call-impulse detector (5) and is arranged in such a way that after the cradle switch (G) of the telephone set (T) has closed, the dialling-impulse blocking circuit (P, R; P', R'), which is normally in its uneffective, non-blocking state, will change over in its blocking state until the receiving circuit (E) has received one of several given dialling-impulse combinations or until the cradle switch (G) has reopened.

2. Circuit according to claim 1, characterized in that the dialling-impulse blocking circuit comprises a resistor (R) connected in series with the telephone set, and a switch (P) connected in parallel with said resistor (R), said switch (P) being normally closed and controllable by the receiving circuit (E), and that the resistor (R) is rated such that an effective transmission of dialling impulses to the exchange will be prevented when the switch (P) is open.

3. Circuit according to claim 1, characterized in that the dialling-impulse blocking circuit comprises a resistor (R') connected in series with a switch (P') being normally open and controllable by the receiving circuit (E), that said series connection is in parallel with the telephone set (T), and that said resistor (R') is rated such that an effective transmission of dialling impulses to the exchange will be prevented when the switch (P') is closed.

4. Circuit according to one of claim 1–3, characterized in that the given dialling-impulse combinations are defined by code numbers having a certain number of digits stored in the receiving circuit (E).

5. Circuit according to one of claim 1–3, characterized in that the given dialling-impulse combinations are defined by code numbers stored in the receiving circuit (E).

6. Circuit according to one of claims 1–3, characterized in that when the call-impulse detector (5) responds it switches a bistable control member (10) into a state, in which a blocking signal is produced that prevents the dialling-impulse blocking circuit (P, R; P', R') from being changed over in its blocking state, and that said control member (10) is reset, thereby canceling the blocking signal, either by means of a timing circuit (9) connected behind the dialling-impulse detector (5), after a period of time being longer than a dialling-impulse period, or by means of a zero current detector (4) that responds to the disappearance of the line-current due to the opening of the cradle switch (G), and that the line-current detector (3) responding to the appearance of the line-current is arranged in such a way that on the one hand the dialling-impulse blocking circuit (P, R; P', R') is changed over in its blocking state and on the other hand said timing circuit (9) is reset in its state of rest if excited previously by the dialling-impulse detector (5).

7. Circuit according to claim 6, characterized in that the dialling-impulse detector (1) and a memory (2) for the given dialling-impulse combinations are connected to a comparator (6), that the line current detector (3) is connected to the one input (s) of a switching member (8) and that the comparator (6), the zero current detector (4) and the control member (10) are connected to the other input (r) of said switching member (8) which controls the dialling-impulse blocking circuit (P, R; P', R') switching said dialling-impulse blocking circuit in the blocking state when said first mentioned input (s) is energized, and in the non-blocking state when said second mentioned input (r) is energized.

## Revendications

1. Circuit de détection d'impulsions de sélection pour station téléphonique, comprenant un récepteur (E) branché à la ligne téléphonique (a, b) et comprenant un détecteur de courant de ligne et un détecteur d'impulsions de sélection, caractérisé en ce qu'il comporte, sur la ligne (a, b), du côté du récepteur (E) opposé au poste téléphonique (T), un circuit de blocage des impulsions de sélection (P, R; P', R') commandé par le récepteur (E), et par le fait que le récepteur comprend en outre un détecteur de signal d'appel (5) et qu'il est agencé de telle sorte que le circuit de blocage des impulsions de sélection (P, R; P', R'), qui se trouve normalement à l'état inactif, non bloquant, est commuté dans l'état bloquant par le récepteur (E) après fermeture du contact de fourchette (G) du poste d'abonné (T), avant tout travail du détecteur de signal d'appel (5), jusqu'à ce que le récepteur (E) reçoive une combinaison donnée de plusieurs impulsions de sélection ou que le contact de fourchette (G) soit à nouveau ouvert.

2. Circuit selon la revendication 1, caractérisé en ce que le circuit de blocage des impulsions de sélection comprend une résistance (R) en série avec le poste téléphonique (T) et un commutateur (P) en parallèle à cette résistance (R), ce commutateur étant normalement fermé et commandable par le récepteur (E), ladite résistance (R) ayant une valeur telle qu'une transmission efficace des impulsions de sélection vers le central est empêchée lorsque le commutateur (P) est ouvert.

3. Circuit selon la revendication 1, caractérisé en ce que le circuit de blocage des impulsions de sélection comprend une résistance (R') en série avec un commutateur (P') commandable par le récepteur (E) et normalement ouvert, ce circuit série étant branché en parallèle au poste téléphonique (T), ladite résistance (R') ayant une valeur telle qu'une transmission efficace des impulsions de sélection vers le central est empêchée lorsque le commutateur (P') est fermé.

4. Circuit selon l'une quelconque des revendications 1 à 3, caractérisé en ce que les combinaisons données d'impulsions de sélection sont définies par des nombres codes avec un nombre déterminé de chiffres mémorisés dans le récepteur (E).

5. Circuit selon l'une quelconque des revendications 1 à 3, caractérisé en ce que les combinaisons données d'impulsions de sélection sont définies par des nombres codes mémorisés dans le récepteur (E).

6. Circuit selon l'une quelconque des revendications 1 à 3, caractérisé en ce que le détecteur de signal d'appel (5) commute un circuit de commande bistable (10) dans un état dans lequel est émis un signal de blocage empêchant la commutation du circuit de blocage des impulsions de sélection (P, R; P', R') dans l'état bloquant, ce circuit de commande bistable (10) étant commutable dans l'état inverse par un circuit de temporisation (9) également branché après le détecteur de signal d'appel (5), en effaçant le signal de blocage, après un intervalle de temps supérieur à une période de signal d'appel ou par un détecteur de courant zéro (4) réagissant à la disparition du courant de ligne à la suite de l'ouverture du contact de fourchette (G), et par le fait que le détecteur de courant de ligne (3) réagissant à l'apparition du courant de ligne est agencé de manière à, d'une part, commuter le circuit de blocage d'impulsions de sélection (P, R; P', R') dans l'état de blocage et, d'autre part, remettre à zéro ledit circuit de temporisation au cas où il aurait été excité par le détecteur de signal d'appel (5).

7. Circuit selon la revendication 6, caractérisé en ce que le détecteur d'impulsions de sélection (1) et une mémoire (2) pour les combinaisons données d'impulsions de sélection sont reliés à un circuit de comparaison (6), le détecteur de courant de ligne (3) étant relié à une première entrée (s) et le circuit de comparaison (6), le détecteur de courant zéro (4) et le circuit de commande bistable (10) étant reliés à une seconde entrée (r) d'un circuit de commutation (8) commandant le circuit de blocage des impulsions de sélection (P, R; P', R'), le circuit de commutation (8) commutant le circuit de blocage des impulsions de sélection dans l'état de blocage lors de l'excitation de sa première entrée (s) et commutant ledit circuit de blocage dans l'état non-bloquant lors de l'excitation de sa seconde entrée (r).

FIG.1

FIG.2

FIG.3

FIG. 4

FIG. 5

FIG. 6

# FIG.7